# EUROPÄISCHE PATENTSCHRIFT

(11) **EP 0 999 938 B1**
(45) Veröffentlichungstag und Bekanntmachung des Hinweises auf die Patenterteilung: **09.01.2002**
(21) Anmeldenummer: 98942632.5
(22) Anmeldetag: 25.07.1998
(51) Int. Cl.: B60B 17/00, C21D 9/34

(54) **SCHIENENRAD MIT VERSCHLEISSOPTIMIERTER LAUFFLÄCHE**
RAIL WHEEL WITH BEARING SURFACE WITH OPTIMISED RESISTANCE TO WEAR
ROUE DE CHEMIN DE FER DOTEE D'UNE SURFACE DE ROULEMENT A USURE OPTIMISEE

(30) Priorität: 30.07.1997 DE 19732809
(43) Veröffentlichungstag der Anmeldung: 17.05.2000
(73) Patentinhaber: Bochumer Verein Verkehrstechnik GmbH, 44793 Bochum (DE)
(72) Erfinder: SCHNEIDER, Jürgen, D-44797 Bochum (DE); MOMBREI, Werner, D-01723 Kesselsdorf (DE)
(74) Vertreter: Knauf, Rudolf, Dipl.-Ing.
(86) Internationale Anmeldenummer: EP9804684
(87) Internationale Veröffentlichungsnummer: WO9906226

(56) Entgegenhaltungen:
- EP-A- 0 115 046
- EP-A- 0 116 359
- WO-A-93/13953
- DE-C- 971 761
- DE-C- 3 509 582
- FR-A- 835 224
- GB-A- 181 481
- GB-A- 1 277 354
- US-A- 3 284 251
- US-A- 4 230 043

## Beschreibung

Die Erfindung bezieht sich auf ein Schienenrad aus einem Radkörper und einem aus einem einzigen Material bestehenden Radaußenteil (Radkranz oder Radreifen), das neben seiner Lauffläche einseitig einen Spurkranz umfaßt.

Schienenräder unterliegen im Fahrbetrieb nicht nur einem natürlichen gleichmäßigen Verschleiß an der Oberfläche, sondern auch örtlich einem erhöhten Verschleiß. An bestimmten Bereichen bilden sich Risse aus und es kommt zu Abblätterungen und Ausbröckelungen an der Lauffläche. Außerdem steigt mit diesem erhöhten Verschleiß die Tendenz zum Unrundwerden der Lauffläche.

Um das Lauf- und Bremsverhalten von Schienenrädern und deren Lebensdauer zu verbessern, ist ein sogenanntes Adhäsionsrad bekannt geworden (DE-Patentanmeldung 55 45 42, bekanntgemacht am 24.09.1952), dessen Radaußenteil in der Lauffläche eine umlaufende, mit einem anderen Material, und zwar Kupfergraphit, ausgefüllte äußere Ringnut aufweist. Es ist nicht bekannt, daß ein solches Rad jemals zum Einsatz gekommen ist. Es ist auch höchst fraglich, ob ein solches Rad gegenüber herkömmlichen Rädern, deren Lauffläche aus einem einheitlichen Material besteht, eine erhöhte Lebensdauer hat, denn das in der Nut eingebettete Kupfergraphit verschleißt auf jeden Fall schneller als eine Lauffläche aus Stahl.

Ferner ist ein Eisenbahnrad bekannt (EP 0 116 359 A2), bei dem den unterschiedlich starken Beanspruchungen der Lauffläche und des Spurkranzes dadurch Rechnung getragen worden ist, daß der Spurkranz gehärtet ist. Die Härtung kann sich dabei bis in den Bereich der Lauffläche erstrecken oder sogar die gesamte Lauffläche umfassen. Auch bei einem solchen Rad zeigt sich in der Praxis, daß es nicht zu einem natürlichen gleichmäßigen Verschleiß an der Lauffläche, sondern zu Abblätterungen und Ausbröckelungen kommt.

Ferner ist ein Schienenrad bekannt (DT 26 10 157 A1), das in der Lauffläche und im Spurkranz umlaufende Ringnuten aufweist, die mit einem hochverschleißfesten Schweißzusatzwerkstoff 5 ausgefüllt sind. Ob ein solches Rad Eingang in die Praxis gefunden hat, ist nicht bekannt. Es ist aber offensichtlich, daß die Herstellung eines solchen Rades wegen der in der Regel einzufräsenden Nuten und deren anschließendes Auffüllen mit einem hochverschleißfesten Schweißzusatzwerkstoff äußerst aufwendig ist.

Endlich ist aus der gattungsgemässen FR-A-835 224 bekannt, zur Vermeidung einer unterschiedlichen Härtung eines Schienenrades im Bereich der Lauffläche die Lauffläche entsprechend der unterschiedlichen Massenverteilung unterschiedlich stark aufzuheizen, und zwar im Bereich des Spurkranzes stärker als im gegenüberliegenden Bereich. Das erlaubt es, eine gleichmäßige Abschreckung mit dem Ergebnis vornehmen zu können, daß das Härteprofil über die Breite der Lauffläche konstant ist.

Der Erfindung liegt die Aufgabe zugrunde, ein Schienenrad mit einer verschleißoptimierten Lauffläche bei gleichzeitiger Minimierung der Rißbildung zu schaffen. Darüber hinaus liegt der Erfindung die Aufgabe zugrunde, ein Verfahren zur Herstellung eines solchen Schienenrades anzugeben.

Diese Aufgabe wird mit einem Schienenrad der eingangs genannten Art dadurch gelöst, daß am fabrikneuen Rad die Lauffläche über ihre Breite ein unterschiedliches Härteprofil mit einem Härteminimum im mittleren Bereich hat. Gute Erfahrungen hat man mit einem Schienenrad gemacht, bei dem die Härte im mittleren Bereich der Lauffläche 220 bis 270 HB und in den Nachbarbereichen 250 bis 300 HB beträgt.

Der erfindungsgemäßen Lösung liegt die Erkenntnis zugrunde, daß das fabrikneue Schienenrad mit einem über die Breite der Lauffläche gleichen Härtewert im Fahrbetrieb an der Lauffläche eine unterschiedliche Kaltverfestigung über die Breite erhält. Vor allem im mittleren Bereich der Lauffläche bilden sich Zonen mit Härtewerten von etwa 350 HB aus. In diesen Bereichen kommt es zu einem erhöhten Verschleiß infolge von Abblätterungen und Ausbröckelungen des Materials. Außerdem kommt es zu einer Rißbildung an der Lauffläche. Bei der erfindungsgemäßen Lösung wird diesem sich im Fahrbetrieb einstellenden unterschiedlichen Härteprofil über die Breite der Lauffläche dadurch entgegengewirkt, daß das fabrikneue Rad in den Nachbarbereichen des mittleren Bereichs der Lauffläche eine höhere Härte hat. Steigt nun im Fahrbetrieb aufgrund von Kaltverfestigung die Härte im mittleren Laufflächenbereich an, dann ergibt sich ein Härteprofil über die Laufflächenbreite, das gegenüber herkömmlichen Rädern vergleichmäßigt ist. Die Folge ist, daß die Gefahr von Rissen, Abblätterungen und Ausbröckelungen, also ein erhöhter Verschleiß und die Tendenz zum Unrundwerden, erheblich vermindert ist.

Das über die Breite der Lauffläche unterschiedliche Härteprofil läßt sich auf verschiedene Art und Weise herstellen.

So kann die Härtung der Lauffläche durch eine über deren Breite gleichmäßige Wärmebehandlung erfolgen, während der mittlere Bereich durch einen entfernbaren Wärmeschutz abgeschirmt ist, unter dem nach seinem Entfernen die Lauffläche eine geringere Härte als in den Nachbarbereichen hat.

Als Wärmeschutz kann eine umlaufende Bandage verwendet werden. Als Wärmeschutz kann aber auch auf der Lauffläche ein umlaufender Materialberg vorgesehen sein, der nach der Wärmebehandlung mechanisch abgearbeitet wird.

Alternativ zu dieser gleichmäßigen Wärmebehandlung unter Verwendung eines Wärmeschutzes für den mittleren Bereich kann die Härtung der Lauffläche aber auch durch eine über die Breite ungleichmäßige Wärmebehandlung erfolgen. Dabei erfolgt lokal begrenzt ein Aufheizen und Abkühlen.

Im folgenden wird die Erfindung anhand einer zwei Ausführungsbeispiele für die Wärmebehandlung darstellenden Zeichnung näher erläutert. Im einzelnen zeigen:
- Figur 1: einen Radkranz im Querschnitt mit einer umlaufenden Bandage als Wärmeschutz
und
- Figur 2: einen Radkranz mit einem als Wärmeschutz umlaufenden Materialberg auf der Lauffläche.

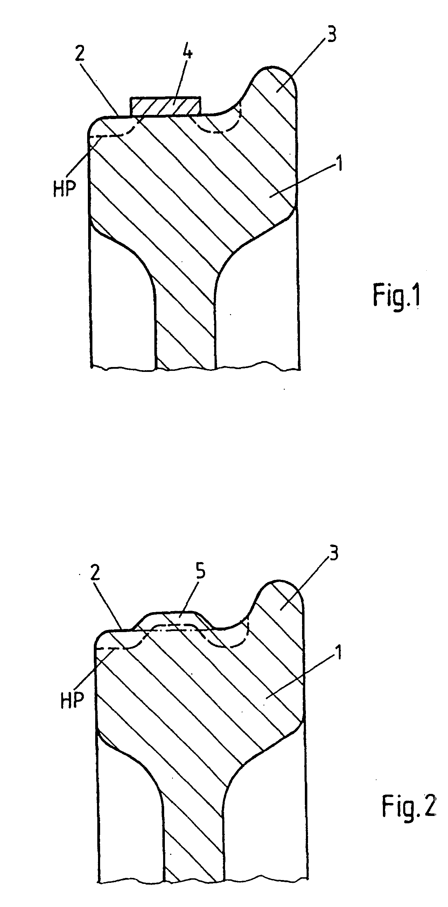

Ein Schienenrad besteht aus Radkörper und Radaußenteil, das als Felge mit Radreifen oder wie beim Ausführungsbeispiel der Figuren 1 und 2 dargestellt ist, als Radkranz ausgebildet sein kann. Die Erfindung ist sowohl für einen Radkranz als auch für einen Radreifen bestimmt.

Der Radkranz 1 weist eine Lauffläche 2 mit einem einseitig angeordneten Spurkranz 3 auf.

Beim Ausführungsbeispiel der Figur 1 ist der mittlere Bereich der Lauffläche 2 durch eine als Wärmeschutz dienende, umlaufende Bandage 4 abgeschirmt. Durch die Lage dieser Bandage 4 auf der Lauffläche 2, ihre Größe und ihre Wärmeleitfähigkeit läßt sich auf einfache Art und Weise eine einfache örtlich gezielte Wärmebehandlung der Lauffläche 2 durchführen. Sowohl die Erwärmung als auch die Abkühlung kann nämlich über die gesamte Breite der Lauffläche 2 gleichmäßig erfolgen. Die Bandage 4 bewirkt, daß die damit verbundene Härtung der Lauffläche 2 im wesentlichen auf die Nachbarbereiche der Bandage 4 beschränkt ist. Jedenfalls ergeben sich hier höhere Härtewerte als im mittleren abgeschirmten Bereich, wie in der Zeichnung durch die gestrichelte Linie für das Härteprofil HP angedeutet ist. Es hat sich herausgestellt, daß das Verschleißminimum der Lauffläche 2 bei Härtewerten von 280 HB liegt.

Nach Entfernen der Bandage 4 erfolgt noch ein Überdrehen des Radkranzes auf das Fertigmaß. Das dann fabrikneue Rad hat eine über die Breite seiner Lauffläche 2 unterschiedliche Härte. Erst im Fahrbetrieb erfolgt die Kaltverfestigung des mittleren Bereichs, so daß sich nach kurzer Zeit eine vergleichmäßigte Härte über die gesamte Breite der Lauffläche ergibt.

Beim Ausführungsbeispiel der Figur 2 hat die Lauffläche 2 des Radkranzes 1 auch nicht annähernd das Fertigmaß, sondern im mittleren Bereich einen Materialberg 5. Dieser Materialberg 5 wirkt wie beim Ausführungsbeispiel der Figur 1 die Bandage 4 als Wärmeschutz. Wie in der Zeichnung angedeutet, stellt sich bei einer über die Breite der Lauffläche 2 gleichmäßigen Wärmebehandlung ein Härteprofil HP ein, das von der Oberfläche die gleiche

Tiefe erreicht. Dies ist in der Zeichnung gestrichelt angedeutet. Da aber nach der Wärmebehandlung der Materialberg 5 durch mechanische Bearbeitung abgetragen wird, erhält man im Ergebnis ein Härteprofil, das in den Nachbarbereichen zum mittleren Bereich größer als im mittleren Bereich ist. Es wird also der gleiche Effekt wie beim Ausführungsbeispiel der Figur 1 mit der Bandage 4 erhalten.

In den Ausführungsbeispielen ist die dritte Art der Wärmebehandlung nicht dargestellt, bei der begrenzt lokal nur die Nachbarbereiche des mittleren Bereichs von der Lauffläche 2 aus wärmebehandelt werden. Auch auf diese Art und Weise läßt sich ein Härteprofil erreichen, wie es am Beispiel der Figuren 1 und 2 dargestellt ist.

## Patentansprüche

1. Schienenrad aus einem Radkörper und einem aus einem einzigen Material bestehenden Radaußenteil, z.B. Radkranz (1) oder Radreifen, das neben einer Lauffläche (2) einseitig einen Spurkranz (3) umfaßt,
**dadurch gekennzeichnet, daß** am fabrikneuen Rad die Lauffläche (2) über ihre Breite ein unterschiedliches Härteprofil (HP) mit einem Härteminimum im mittleren Bereich hat.

2. Schienenrad nach Anspruch 1,
**dadurch gekennzeichnet, daß** die Härte im mittleren Bereich (X bis Y) 220 bis 270 HB und in den Nachbarbereichen 250 bis 300 HB, insbesondere 280 HB, beträgt.

3. Verfahren zum Herstellen eines Schienenrades nach Anspruch 1 oder 2,
**dadurch gekennzeichnet, daß** die Härtung der Lauffläche (2) durch eine über deren Breite gleichmäßige Wärmebehandlung erfolgt, während der mittlere Bereich durch einen entfernbaren Wärmeschutz (4,5) abgeschirmt ist, unter dem nach seinem Entfernen die Lauffläche (2) eine geringere Härte als in den Nachbarbereichen erhält.

4. Verfahren nach Anspruch 3,
**dadurch gekennzeichnet, daß** als Wärmeschutz (4) eine umlaufende Bandage verwendet wird.

5. Verfahren nach Anspruch 3,
**dadurch gekennzeichnet, daß** als Wärmeschutz (5) auf der Lauffläche (2) ein umlaufender Materialberg vorgesehen ist, der nach der Wärmebehandlung mechanisch abgearbeitet wird.

6. Verfahren nach Anspruch 3,
**dadurch gekennzeichnet, daß** die Härtung der Lauffläche (2) durch eine über deren Breite ungleichmäßige Wärmebehandlung erfolgt.

## Claims

1. Track wheel consisting of a wheel body and an outer wheel part comprised of a single material, e.g., wheel rim (1) or tire, which unilaterally encompasses a wheel flange (3) next to a running surface (2), **characterized by** the fact that the running surface (2) at the factory-new wheel has a varying hardness profile (HP) over its width with a minimal hardness in the middle area.

2. Track wheel according to claim 1, **characterized by** the fact that the hardness measures 220 to 270 HB in the middle area (X to Y), and 250 to 300 HB, in particular 280 HB, in the adjacent areas.

3. Procedure for manufacturing a track wheel according to claim 1 or 2, **characterized by** the fact that the running surface (2) is hardened via a uniform heat treatment over its width, while the middle area is screened off by a removable heat protection means (4, 5), under which the running surface (2) has a lower hardness after its removal than in the adjacent areas.

4. Procedure according to claim 3, **characterized by** the fact that a continuous bandage is used as the heat protection means (4).

5. Procedure according to claim 3, **characterized by** the fact that a continuous material hill is provided as the heat protection means (5) on the running surface (2), which is removed via machining after heat treatment.

6. Procedure according to claim 3, **characterized by** the fact that the running surface (2) is hardened via irregular heat treatment over its width.

## Revendications

1. Roue pour rail constituée d'un corps de roue et d'une pièce extérieure de roue, par exemple jante de roue (1) ou rebord de roue, qui est constituée d'une seule matière et qui comporte unilatéralement, à côté d'une bande de roulement (2), un boudin (3),
**caractérisée en ce que**
la bande de roulement (2), de la roue sortant de l'usine, comporte suivant la largeur, un profil de dureté non constante (HP) avec un minimum de dureté dans le domaine médian.

2. Roue pour rail selon la revendication 1,
**caractérisée en ce que** la dureté dans le domaine médian (X à Y) est située entre 220 et 270 HB, et dans les domaines voisins entre 250 et 300 HB, notamment 280 HB.

3. Procédé de fabrication d'une roue pour rail selon la revendication 1 ou 2,
**caractérisé en ce que** le durcissement de la bande de roulement (2) est effectué par un traitement thermique uniforme suivant la largeur de celle-ci, tandis que le domaine médian est protégé par un écran amovible contre la chaleur (4, 5), au-dessous duquel, après son retrait, la bande de roulement (2) présente une dureté inférieure à celle des domaines voisins.

4. Procédé selon la revendication 3,
**caractérisé en ce qu'**un bandage s'étendant sur toute la périphérie est utilisé en tant que protection contre la chaleur (4).

5. Procédé selon la revendication 3,
**caractérisé en ce qu'**un bourrelet de matière s'étendant sur toute la périphérie est prévu en tant que protection contre la chaleur (5), bourrelet qui est usiné mécaniquement après le traitement thermique.

6. Procédé selon la revendication 3,
**caractérisé en ce que** le durcissement de la bande de roulement (2) est effectué par un traitement thermique non uniforme selon la largeur de la bande.
